# EUROPÄISCHE PATENTANMELDUNG

(11) **EP 1 291 126 A1**
(43) Veröffentlichungstag der Anmeldung: **12.03.2003**
(21) Anmeldenummer: 02019529.3
(22) Anmeldetag: 02.09.2002
(51) Int. Cl.: B23Q 7/03, B23Q 7/16

(54) **Vorrichtung zum Bearbeiten eines Werkstückes in zwei Schritten**

(30) Priorität: 05.09.2001 DE 20114666 U
(71) Anmelder: Vobhag Finishing Systems, 6370 Stans (Schweiz) (CH)
(72) Erfinder: Vogel, Josef, 6048 Horw (CH)
(74) Vertreter: Kemény AG Patentanwaltbüro

(57) **Zusammenfassung**

Die Vorrichtung zur Bearbeitung eines Werkstückes in zwei Schritten weist eine Bearbeitungseinrichtung (10;12,14) mit einem Eingang und Ausgang auf. Weiter ist eine Fördereinrichtung (22, 54, 36, 42) zum Fördern des Werkstückes entlang einem vorbestimmten Förderweg vom Ausgang der Bearbeitungseinrichtung (10; 12, 14) zu ihrem Eingang vorhanden. Dieser Förderweg weist mindesten einen Umlenkabschnitt (60) auf, wobei vorteilhaft der Förderweg in diesem Umlenkabschnitt (6) zumindest abschnittweise bogenförmig verläuft. Damit wird zuverlässig ein unbeabsichtigtes Wenden des Werkstückes im Bereich des Umlenkabschnittes (60) verhindert und damit ein korrektes Bearbeiten beider Schritte am Werkstück erzielt wird.

## Beschreibung

Die Erfindung betrifft eine Vorrichtung zum Bearbeiten eines Werkstücks in zwei Schritten, mit
mindestens einer einen Eingang und einen Ausgang aufweisenden Bearbeitungseinrichtung und
einer Fördereinrichtung zum Fördern des Werkstücks entlang einem vorbestimmten Förderwege von dem Ausgang zu dem Eingang,
wobei der Förderweg mindestens einen Umlenkabschnitt aufweist, in dem sich die Förderrichtung ändert.

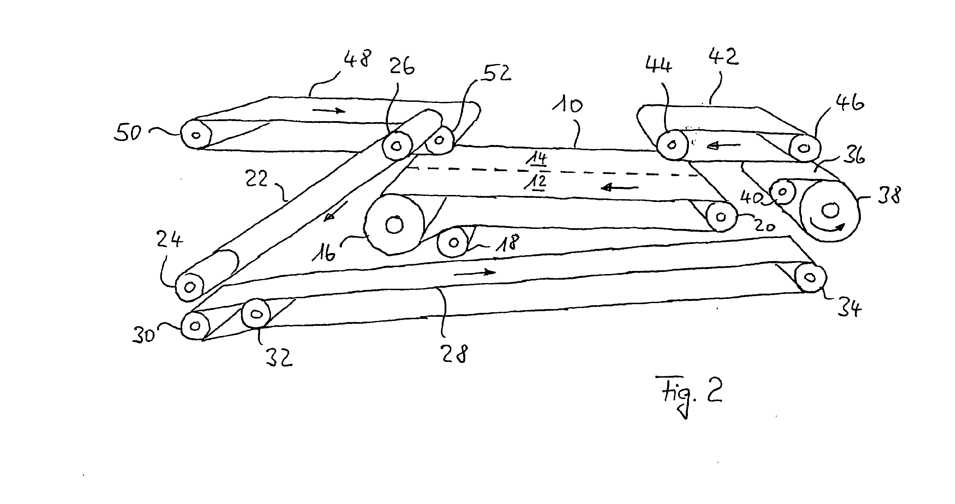

Vorrichtungen der oben beschriebenen Art sind bekannt. Ein Beispiel einer solchen bekannten Vorrichtung zeigt Fig. 2. Danach ist ein Haupttransportband 10 mit einer ersten Spur 12 und einer zweiten Spur 14 vorgesehen. Das Transportband 10 ist mittels einer Antriebsrolle 16 angetrieben und läuft um. Zur Führung dienen weitere Rollen 18 u. 20. Zur Bearbeitung werden Werkstücke mittels einer nicht dargestellten Zuführeinrichtung mit ihrer Oberseite nach oben auf die erste Spur 12 aufgelegt. Dieses Auflegen erfolgt in der Nähe der Rolle 20. Die Antriebsrolle 16 wird derart angetrieben, dass sich die Werkstücke auf der ersten Spur 12 in der Zeichnung von rechts nach links bewegen. Während dieser Bewegung werden sie auf seiner Oberseite bearbeitet, indem beispielsweise die Oberfläche veredelt wird.

Links von dem Haupttransportband 10 ist ein Überführband 22 vorgesehen, das über eine Antriebsrolle 24 und eine Führungsrolle 26 gelegt ist. Auf der dem Haupttransportband 10 zugewendeten Seite ist das Überführband 22 mit einer in der Zeichnung nicht dargestellten permanentmagnetischen Platte hinterlegt, die stationär gehalten ist, so dass das Überführband 22 darüberläuft. Da die zu bearbeitenden Werkstücke aus einem magnetisierbaren Werkstoff sind, werden sie im Bereich der Antriebsrolle 16 von der hinter dem Überführband 22 liegenden permanentmagnetischen Platte angezogen, so dass sie an dem Überführband 22 haften und in Fig. 2 nach links unten transportiert werden.

In der Nähe der Rolle 24 ist das Überführband 22 mit einer permanentmagnetischen Platte hinterlegt, die eine derartige Polarität hat, dass die im oberen Bereich des Überführbandes 22 angezogenen Werkstücke in der Nähe der Rolle 24 abgestoßen, zumindest aber nicht mehr angezogen werden. Dadurch fallen die Werkstücke auf ein mit der Bezugszahl 28 bezeichnetes Rückführband. Das Rückführband 28 ist über eine Antriebsrolle 30 sowie über Führungsrollen 32 u. 34 geführt. Auf dem Rückführband 28 werden die Werkstücke in der Zeichnung von links nach rechts gefördert, wobei die Stellung des Rückführbandes 28 derart gewählt ist, dass die Werkstücke in der Vertikalprojektion einen Spurwechsel erfahren. Mit anderen Worten liegt das in Fig. 2 links dargestellte Ende in der Vertikalprojektion in etwa unterhalb der ersten Spur 12, wohingegen das rechte Ende in der Vertikalprojektion in etwa unterhalb der zweiten Spur 14 liegt.

Von dem Rückführband 28 gelangen die Werkstücke auf ein Wendeband 36, das über eine magnetisierte Rolle 38 sowie eine Antriebsrolle 40 geführt ist. Wegen der Magnetisierung der Rolle 38 werden die Werkstücke auf das Wendeband 36 gezogen und unter Wenden nach oben transportiert. Von dort gelangen sie zu einem Überführband 42, das über eine Antriebsrolle 44 und eine Führungsrolle 46 gelegt ist. Das Überführband 42 ist wiederum mit einer in der Zeichnung nicht dargestellten Permanentmagnetplatte hinterlegt, so dass die Werkstücke angezogen und von dem Überführband 42 in der Zeichnung von rechts nach links transportiert werden.

Von dem Überführband 42 gelangen die Werkstücke auf die zweite Spur 14 des Haupttransportbandes 10, wo ihre nunmehr oben liegende Rückseite bearbeitet wird.

Am Ende der zweiten Spur 14 werden die Werkstücke schließlich von einem Überführband 48 übernommen, das über eine Antriebsrolle 50 und eine Führungsrolle 52 gelegt ist. Wiederum ist dazu das Überführband 48 auf seiner der zweiten Spur 14 des Haupttransportbandes 10 zugewandten Seite mit einer Permanentmagnetplatte hinterlegt, so dass die Werkstücke an dem Überführungsband 48 haften.

Von dem Überführband 48 werden die Werkstücke dann mittels einer in der Zeichnung nicht dargestellten Abführeinrichtung abgeführt.

Wie die obigen Erläuterungen zeigen, werden die Werkstücke bei einer Bearbeitungsvorrichtung der beschriebenen Art entlang einem quasi geschlossenen Förderweg geführt, auf dem einmal die Förderrichtung geändert wird. Eine Änderung der Förderrichtung findet bei der Übergabe von dem Überführband 22 an das Rückführband 28 statt. Während nämlich die Förderung durch das Überführband 22 in Fig. 2 von rechts nach links gerichtet ist, ist sie bei der Förderung durch das Rückführband 28 von links nach rechts gerichtet.

Bei dem Richtungswechsel im Rahmen der Übergabe der Werkstücke von dem Überführband 22 an das Rückführband 28 besteht allerdings das Problem, dass einige der Werkstücke ungewollt gewendet werden. Werden diese Werkstücke dann später mittels des Wendebandes 36 abermals gewendet, so werden sie sowohl auf der ersten Spur 12 als auch auf der zweiten Spur 14 jeweils auf ihrer Oberseite bearbeitet, wohingegen eine Bearbeitung der Unterseite völlig unterbleibt.

Der Erfindung liegt daher die Aufgabe zu Grunde, ein ungewolltes Wenden der Werkstücke in einem Umlenkabschnitt, d.h. in einem Abschnitt, in dem sich die Förderrichtung ändert, zu vermeiden.

Erfindungsgemäß wird diese Aufgabe bei einer Vorrichtung der eingangs genannten Art dadurch gelöst, dass der Förderweg in dem Umlenkabschnitt in der Vertikalprojektion zumindest abschnittweise bogenförmig verläuft.

Der Erfindung liegt dabei die verblüffend einfache Erkenntnis zu Grunde, dass ein unbeabsichtigtes Wenden der Werkstücke im Bereich eines Umlenkabschnittes zuverlässig vermieden wird, wenn ein in der Vertikalprojektion zumindest abschnittweise bogenförmiger Verlauf des Förderweges gewählt wird. Mit anderen Worten wird die Aufgabe durch Vermeiden eines abrupten Änderns der Förderrichtung gelöst.

Die Erfindung ist generell auf alle Arten von Vorrichtungen zum Bearbeiten eines Werkstücks in zwei Schritten anwendbar. Bevorzugt findet sie jedoch Anwendung bei solchen Vorrichtungen, bei denen der Förderweg mindestens einen Wendeabschnitt aufweist, in dem das Werkstück gewendet wird. Dadurch kann nämlich erreicht werden, dass in einem ersten Bearbeitungsschritt eine Vorderseite eines Werkstücks und in einem zweiten Bearbeitungsschritt eine Rückseite des Werkstücks bearbeitet wird.

Weiter bevorzugt weist die erfindungsgemäße Vorrichtung im Rahmen der Fördereinrichtung mindestens einen Bandförderer mit einem umlaufenden Band auf.

Dabei ist weiter bevorzugt der Umlenkabschnitt von einem Teil des Bandförderers gebildet. Auf diese Weise kann auch im Rahmen der Erfindung auf in der Praxis bereits bewährte Bandförderer zurückgegriffen werden.

Bevorzugt läuft das Band dabei durch mindestens ein Magnetfeld. Auf diese Weise können zumindest magnetische Werkstücke auf besonders einfache Weise an dem Band gehalten werden.

Im folgenden ist die Erfindung anhand eines bevorzugten Ausführungsbeispiels unter Bezugnahme auf die beiliegende Zeichnung mit weiteren Einzelheiten näher erläutert. Dabei zeigen
- Fig. 1: eine besonders bevorzugte Ausführungsform der erfindungsgemäßen Vorrichtung zum Bearbeiten eines Werkstücks in zwei Schritten und
- Fig. 2: eine bekannte Vorrichtung zum Bearbeiten eines Werkstücks in zwei Schritten.

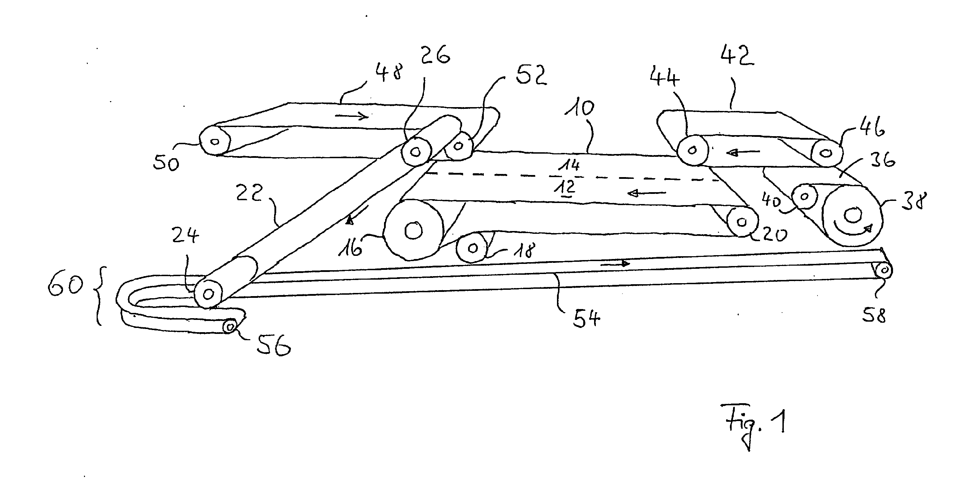

Die Vorrichtung nach Fig. 1 entspricht in weiten Teilen derjenigen nach Fig. 2. Es ist lediglich das Rückführband 28 durch eine andere Einrichtung ersetzt. Daher sind auch diejenigen Elemente, in denen die Figuren 1 u. 2 übereinstimmen, mit denselben Bezugszeichen versehen. Zur Meidung von Wiederholungen werden diese Elemente im folgenden auch nicht mehr im einzelnen beschrieben.

Bei der Vorrichtung nach Fig. 1 ist im Anschluss an das Überführband 22 an Stelle des Rückführbandes 28 ein Rückführband 54 vorgesehen, das über eine Antriebsrolle 56 und eine Führungsrolle 58 geführt ist. Das Rückführband 54 läuft - in Übereinstimmung mit der Förderrichtung des Überführbandes 22 - zunächst in Fig. 1 von rechts nach links. Durch diese Übereinstimmung in der Förderrichtung ist ein unbeabsichtigtes Wenden der Werkstücke bei der Übergabe von dem Überführband 22 an das Rückführband 54 zuverlässig vermieden. Im Anschluss an die Übergabe verläuft das Rückführband 54 in einem Umlenkabschnitt 60 in der Vertikalprojektion bogenförmig, so dass ein jedes unbeabsichtigte Wenden der Werkstücke vermeidendes Umkehren der Förderrichtung erzielt wird. Im Anschluss an den Umlenkabschnitt 60 werden die Werkstücke nämlich nicht mehr von rechts nach links, sondern von links nach rechts gefördert.

Dadurch, dass ein unbeabsichtigtes Wenden innerhalb des Umlenkabschnittes 60 erfindungsgemäß zuverlässig vermieden ist, erfolgt nur noch ein einziges Wenden der Werkstücke, nämlich auf dem Weg von dem Rückführband 28 zu dem Überführband 42 (vgl. Wendeband 36), so dass zuverlässig in dem ersten Bearbeitungsschritt auf der ersten Spur 12 die Vorderseite der Werkstücke und in dem zweiten Bearbeitungsschritt auf der Spur 14 die Rückseite der Werkstücke bearbeitet wird.

Die in der obigen Beschreibung, den Ansprüchen sowie der Zeichnung offenbarten Merkmale der Erfindung können sowohl einzeln als auch in beliebigen Kombinationen für die Verwirklichung der Erfindung in ihren verschiedenen Ausgestaltungen wesentlich sein.

## Patentansprüche

1. Vorrichtung zum Bearbeiten eines Werkstücks in zwei Schritten, mit
mindestens einer einen Eingang und einen Ausgang aufweisenden Bearbeitungseinrichtung (10; 12, 14) und
einer Fördereinrichtung (22, 54, 36, 42) zum Fördern des Werkstücks entlang einem vorbestimmten Förderwege von dem Ausgang zu dem Eingang,
wobei der Förderweg mindestens einen Umlenkabschnitt (60) aufweist, in dem sich die Förderrichtung ändert,
**dadurch gekennzeichnet, dass** der Förderweg in dem Umlenkabschnitt (60) in der Vertikalprojektion zumindest abschnittweise bogenförmig verläuft.

2. Vorrichtung nach Anspruch 1, **dadurch gekennzeichnet, dass** der Förderweg mindestens einen Wendeabschnitt (36, 38, 40) aufweist, in dem das Werkstück gewendet wird.

3. Vorrichtung nach Anspruch 1 oder 2, **dadurch gekennzeichnet, dass** die Fördereinrichtung mindestens einen Bandförderer mit einem umlaufenden Band (22, 54, 36, 42) aufweist.

4. Vorrichtung nach Anspruch 3, **dadurch gekennzeichnet, dass** der Umlenkabschnitt (60) von einem Teil des Bandförderers (54) gebildet ist.

5. Vorrichtung nach Anspruch 3 oder 4, **dadurch gekennzeichnet, dass** das Band (22, 54, 36, 42) durch mindestens ein Magnetfeld läuft.
